**Europäisches Patentamt**

**European Patent Office**

**Office européen des brevets**

(19)

(11) Veröffentlichungsnummer : **0 357 753 B1**

# (12) EUROPÄISCHE PATENTSCHRIFT

(45) Veröffentlichungstag der Patentschrift :
**05.08.92 Patentblatt 92/32**

(21) Anmeldenummer : **89903477.1**

(22) Anmeldetag : **17.03.89**

(86) Internationale Anmeldenummer :
**PCT/EP89/00287**

(87) Internationale Veröffentlichungsnummer :
**WO 89/08617 21.09.89 Gazette 89/23**

(51) Int. Cl.$^5$ : **C02F 3/30,** C02F 3/22,
C02F 3/10

(54) **VERFAHREN UND VORRICHTUNG ZUR BIOLOGISCHEN REINIGUNG VON WASSER MIT EINER VERSCHMUTZUNG AN STICKSTOFF- UND PHOSPHORVERBINDUNGEN SOWIE ORGANISCHEM KOHLENSTOFF.**

(30) Priorität : **17.03.88 DE 3808834**

(43) Veröffentlichungstag der Anmeldung :
**14.03.90 Patentblatt 90/11**

(45) Bekanntmachung des Hinweises auf die
Patenterteilung :
**05.08.92 Patentblatt 92/32**

(84) Benannte Vertragsstaaten :
**AT BE CH DE FR GB IT LI LU NL SE**

(56) Entgegenhaltungen :
**EP-A- 0 172 443**
**US-A- 4 530 762**

(56) Entgegenhaltungen :
**Journal of the Water Pollution Control Federation, Volume 49, Nr. 5, May 1977,
"Communication - Methane as a carbon source inbiological denitrification", pages 855-857**

(73) Patentinhaber : **Harrendorf, Heinz**
**Grethe-Jürgens-Strasse 26**
**W-3000 Hannover 51 (DE)**

(72) Erfinder : **Harrendorf, Heinz**
**Grethe-Jürgens-Strasse 26**
**W-3000 Hannover 51 (DE)**

(74) Vertreter : **König, Norbert, Dipl.-Phys. Dr.**
**Patentanwälte Leine & König**
**Burckhardtstrasse 1**
**W-3000 Hannover 1 (DE)**

Jouve, 18, rue Saint-Denis, 75001 PARIS

EP 0 357 753 B1

## Beschreibung

Die Erfindung betrifft ein Verfahren zur anoxischen, anaeroben und aeroben Behandlung von Wasser mit entsprechenden Konzentrationen an Stickstoff- und Phosphorverbindungen sowie organischer Substanzen, zur Elimination von Stickstoff und Phosphor sowie einem Abbau von organischem Kohlenstoff gemäß Oberbegriff des Anspruchs 1 sowie eine Vorrichtung zur Durchführung des Verfahrens gemäß Oberbegriff nach Anspruch 8.

Die zunehmende Belastung von Flüssen, Seen sowie des Grundwassers durch den Eintrag an Stickstoff- und Phosphorverbindungen, insbesondere von industriellen und kommunalen Abwässern, verursacht eine Eutrophierung der Gewässer. Hierbei ist das Grundwasser besonders durch Nitrate toxisch belastet, und kann erst nach entsprechender Aufbereitung als Trinkwasser verwendet werden.

Für die Verkrautung der Gewässer ist in bedeutendem Maße Phosphat-Phosphor maßgebend, da aus 1 g dieser Verbindung 100 g organische Substanz gebildet wird.

Ein weiterer Faktor für die Verkrautung und Algenbildung sind die Stickstoffverbindungen, die im organisch verschmutzten Wasser vorwiegend in Eiweißverbindungen vorliegen bzw. im Rohoder Abwasser inform von Ammonium, Nitrit, Nitrat und Ammoniakstickstoff in Lösung gegangen sind.

Um den Anstieg der Stickstoff- und Phosphorkonzentrationen in den Gewässern wesentlich zu reduzieren, ist es erforderlich, insbesondere veraltete Klär- und Wasserwerksanlagen im industriellen und kommunalen Bereich durch die Aufstellung umweltfreundlicher und neuzeitlicher Wasserreinigungsanlagen zu modernisieren bzw. zu ergänzen.

Es ist bekannt, daß durch anaerobe und aerobe Abbauprozesse organischer Substanzen, insbesondere von Proteinverbindungen, Ammoniak- bzw. Ammoniumstickstoff freigesetzt wird. Hierbei steht das im Substrat gebildete Ammonium ($NH_4$) und Ammoniak ($NH_3$) in einem ph-Wert abhängigen Gleichgewicht. Bei einem Aerobprozeß werden die organischen Kohlenstoffverbindungen durch chemoorganotrophe Mikroorganismen abgebaut und das produzierte Ammonium zu Nitrat ($NO_3$) oxidiert. Die Oxidation des Ammoniums ($NH_4$) erfolgt durch die nitrifizierenden Bakterien Nitrosomas und Nitrobakter in zwei Biosyntheseschritten gemäß nachstehender Gleichungen:

$$NH_4^+ + 1,5\,O_2 \rightarrow NO_2^- + H_2O + 2\,H^+ - 352\,KJ$$
$$NO_2^- + 0,5\,O_2 \rightarrow NO_3^- - 73\,KJ$$

In einem weiteren Biosyntheseschritt wird ebenfalls durch chemoorganotrophe Bakterien -auch Denitrifikanten genannt- die Umwandlung von Nitraten zu molekularem Stickstoff ($N_2$) vorgenommen. Diese Denitrifikation ist unter Ausschluß von gelöstem Sauerstoff -auch anoxischer Prozeß bezeichnet- jedoch in Anwesenheit organischer Substanzen, z.B. Traubenzucker, nach folgender Gleichung möglich:

$$5C_6H_{12}O_6 + 24NO_3^- \rightarrow 12N_2 + 24HCO_3^- + 6CO_2 + 18H_2O - 12856\,KJ$$

Für den optimalen Ablauf einer Nitrifikation - Denitrifikation spielt die Temperatur eine bedeutende Rolle, da sich die Reaktionsgeschwindigkeit des jeweiligen Prozesses mit steigender Temperatur wesentlich erhöht. Unter diesen Voraussetzungen steigt der Diffusionskoeffizient für Sauerstoff an, wobei die Oberflächenspannung des Wassers gegenüber Luft abnimmt und sich dadurch eingeblasene Luftteilchen feinperlig verteilen können. Es ist somit eine bessere Sauerstoffübertragung möglich.

Andererseits verringern sich die Sättigungswerte für die Lösung von Sauerstoff im Wasser bei erhöhter Temperatur, so daß auch die Denitrifikation weitgehend unter sauerstofffreien Bedingungen optimal ablaufen kann.

Als optimale und wirtschaftliche Substrattemperatur kann 35°C in Ansatz gebracht werden. Bei einem Substrat mit hohen organischen Kohlenstoffpotential steht als Prozeßwärme auch die beim aeroben Prozeß freigewordene Wärme in entsprechendem Maße zur Verfügung.

Da sich die Nitrifikation im sauren Bereich und die Denitrifikation im alkalischen Bereich abspielt, ist es bei einer Kopplung beider Prozesse von Bedeutung, daß sich im Substrat ein ph-Wert im Bereich von 7 einstellt, da sonst mit toxischen oder hemmenden Einflüssen auf die Bakterienpopulation gerechnet werden muß. Es bildet sich z.B. bei einem ph-Wert von 9 ein erhöhter Anteil an Ammoniak im Wasser, der toxisch wirkt.

Zur Erzielung eines hohen Denitrifikationsgrades ist es von Bedeutung, daß ein nitrathaltiges Wasser sauerstofffrei, jedoch mit einem entsprechenden Anteil an organischen Substanzen, zur Verfügung steht bzw. angeboten wird.

Ein weiterer Aspekt ist die Denitrifikationsgeschwindigkeit im Substrat, die bei einer Zusatzdosierung mittels Ethanol oder Methanol etwa um das Zehnfache erhöht werden kann. Dieser Gesichtspunkt steht insbesondere bei einem Wasser ohne endogene Kohlenstoffquellen zur Diskussion, wie dies bei Rohwasser oder dem Abwasser aus einer Stickoxidwaschanlage infrage kommt. Ein weiterer Faktor für einen hohen Abbau- und Nitrifikationsgrad sind die unterschiedlichen Generationszeiten zwischen den chemolithotrophen (Nitrifikanten) und den chemoorganotrophen Mikroorganismen, die bei den Nitratbildnern um das Zehnfache höher liegt. Hier spielt das Verhältnis der organischen Substanzen zum Gesamtstickstoffwert ($BSB_5/N$) eine weitere Rolle, d.h., daß bei einem sehr kleinen Verhältnis ein organisches Substrat zudosiert oder auf eine biologische Vorklärung verzichtet werden muß.

Bei den vorgenannten Prozessen wird etwa 25% des Stickstoffes für den Ein- und Aufbau der Bakteriensubstanz benötigt, wobei 75% des molekular gebildeten Stickstoffes ($N_2$) sowie das gebildete Kohlendioxid ($CO_2$) in die Atmosphäre abgeleitet werden.

Die Phosphorelimination ist grundsätzlich nur durch eine Abscheidung von Überschußschlamm möglich. Es ist jedoch von Bedeutung, daß die im Überschußschlamm eingelagerte Bakterienmasse einen erhöhten Anteil an Phosphorverbindungen aufgenommen hat.

Für eine erhöhte Phosphatspeicherung ist insbesondere die Selektion einer Belebtschlammbiozönose -die Phosphorverbindung wird hierbei in der Bakterienzelle inform von Orthophosphat ($PO_4^{3-}$ aufgenommen- erforderlich, d.h., daß die Mikroorganismen einer Streßsituation unterzogen werden müssen, wobei gleichzeitig ein ständiger, sequentieller Wechsel von anaeroben und aeroben Milieubedingungen erfolgt. Bei der Streßsituation handelt es sich hier um einen Mangel an entsprechenden Nährstotfen.

Durch die Rückführung von Schlamm in einen Anaerobprozeß laufen Stoffwechselvorgänge an, die für den nachgeschalteten Aerobprozeß zu einer erhöhten Phosphataufnahme führen. Es bilden sich in diesem Milieu als Energiequelle für das Wachstum der Zellen das wichtige endogene Substrat Poly-β-Hydroxybuttersäure sowie Enzyme. Darüber hinaus erfolgt im anaeroben Raum oder einer Zone eine Rücklösung von Phosphaten.

Weiter ist es von Bedeutung, daß im zu reinigenden Wasser ein entsprechendes Potential an gut abbaubaren Substanzen -wie Essig- und Buttersäure- zur Verfügung steht oder verfügbar gemacht wird, um die schnelle Rücklösung der Phosphate im Verlauf einer ausreichenden anaeroben Aufenthaltszeit zu steigern. Nitrateinträge in den aneroben Raum sollten jedoch ausdrücklich vermieden werden. In dem anschließenden Aerobprozeß werden dann die freigesetzten Phosphate zum Aufbau und Wachstum neuer Bakterienzellen verbraucht. Bakterienstämme, die eine Nitratatmung durchführen können, wachsen und speichern Phosphatverbindungen und verhalten sich daher im anoxischen Milieu wie im aeroben Bereich.

Eine Aufnahme oder Rücklösung von Phosphaten kann daher auch im anoxischen Milieu erfolgen, soweit das entsprechende Denitrifikationspotential ($BSB_5/NO_x$) vorliegt.

Die Aufgabe der vorliegenden Erfindung besteht darin, ein Verfahren der eingangs genannten Art so auszubilden, daß Stickstoffund Phosphorverbindungen einfacher und optimaler eliminierbar sind sowie eine Vorrichtung anzugeben, mit der das Verfahren besonders vorteilhaft durchführbar ist.

Die Aufgabe wird durch die Ausbildungen nach den Ansprüchen 1 und 8 gelöst.

Es handelt sich bei der zur Diskussion stehenden erfindungsgemäßen Wasserreinigungsanlage um einen kombinierten Reaktor, welcher mit verschiedenen externen Aggregaten ausgerüstet ist.

Vorteilhafte und zweckmäßige Ausgestaltungen der erfindungsgemäßen Aufgabenlösung sind in den Unteransprüchen gekennzeichnet.

Die Erfindung soll daher nachfolgend anhand der beigefügten Zeichnungen näher erläutert werden.

Es zeigt:

Figur 1    Einen senkrechten Schnitt durch den erfindungsgemäß konstruierten Reaktor mit Schaltschema der externen Aggregate und Apparate;

Figur 2    Einen vergrößerten Ausschnitt der anaeroben Zone mit Nitrifikationsteil sowie einer Ausbildung der Substrateinspeisung des Reaktors;

Figur 3    Die schematische Ausbildung des Gasabscheiders beim erfindungsgemäßen Reaktor;

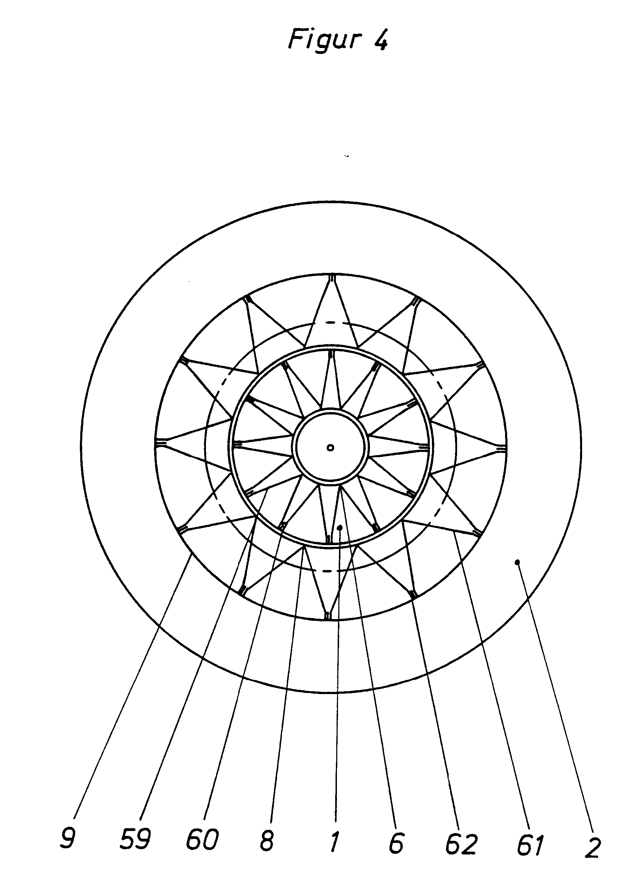

Figur 4    Einen waagerechten vergrößerten Schnitt durch den Reaktor mit schematischer Ausbildung von Leitflächen sowie der angeordneten Trägermaterialien.

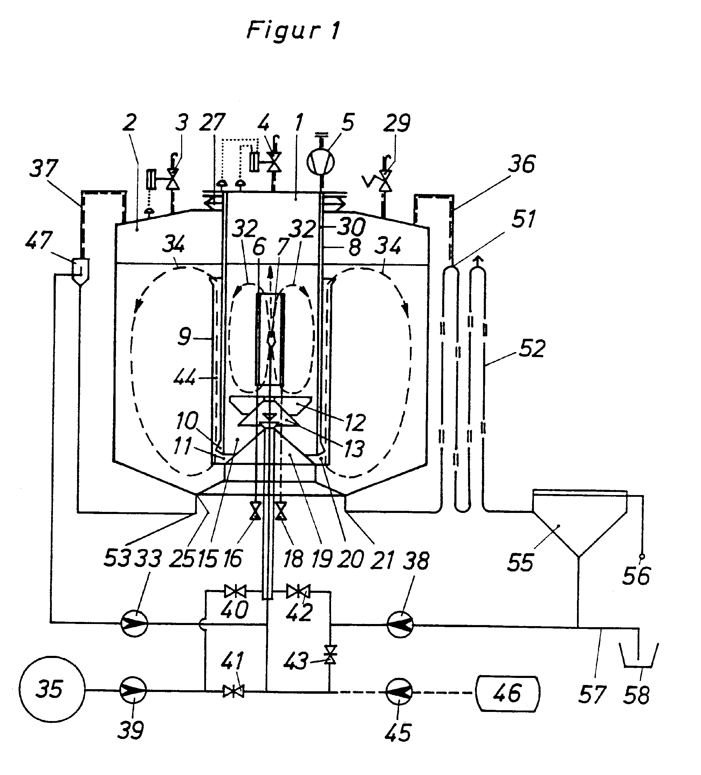

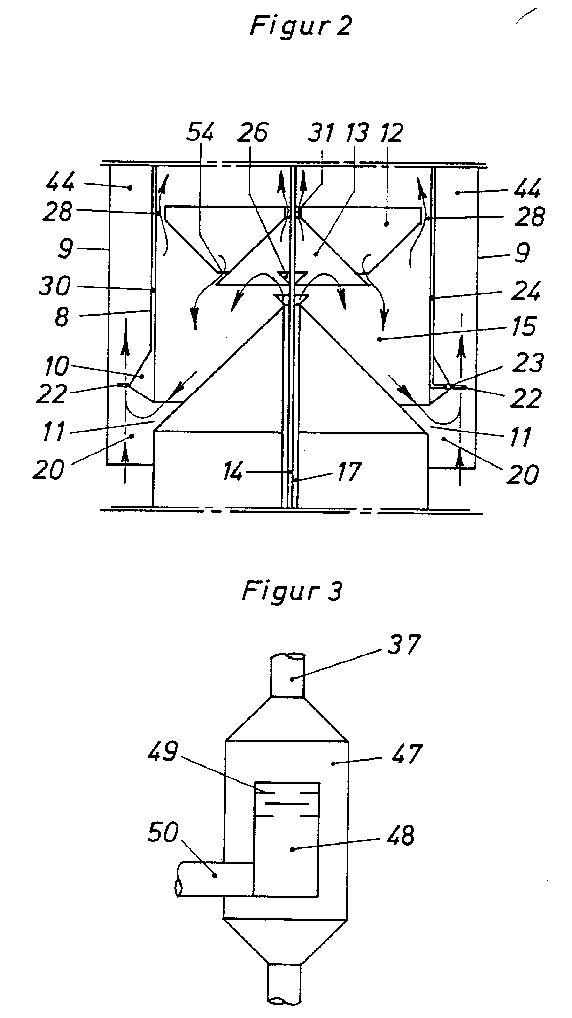

Die Zeichnungen mit Figur 1 und 2 zeigen einen kombinierten Reaktor mit einem ersten Reaktorraum 1 sowie integrierter Zone 15 und einem zweiten Reaktorraum 2. Im ersten Reaktorraum, der innerhalb des zweiten Reaktorraumes angeordnet ist, findet eine Denitrifikation von Nitraten, in der integrierten Zone eine Rücklösung von Phosphaten und im zweiten Reaktorraum eine Nitrifikation von Ammonium bzw. Ammoniak und ein Abbau von organischem Kohlenstoff sowie eine Phosphataufnahme statt.

Der erste Reaktorraum 1 weisteinen hochgezogenen Boden mit kegelförmiger Bodenfläche 19 auf und wird gebildet von einer doppelwandigen oder einwandigen Zylinderwand 8, wobei bei der Doppelwand ein zylindrischer Zwischenraum 30 gebildet ist. Der Zylinder 8 endet oberhalb des kegelförmigen Bodens 19, so daß zwischen Zylinder 8 und Boden 19 ein Ringspalt 11 gebildet wird, über den der erste Reaktorraum 1 mit dem zweiten Reaktorraum 2 in offener Verbindung steht. Das untere Teil des doppelwandigen Zylinders 8 ist als Mischinjektor 10 ausgebildet.

EP 0 357 753 B1

Im unteren Bereich des Reaktorraumes 1 befindet sich eine integrierte Zone, die durch die Anordnung der Sedimentationsvorrichtungen 12 und 13 gebildet wird. Die Zylinderwand 8 wird von einem weiteren Zylinder 9 beabstandet umgeben, so daß eine zylindrische Ringkammer 44 gebildet wird, die als Überlaufkammer ausgebildet ist und beabstandet zum Boden des zweiten Reaktorraumes 2 endet.

Bei einer einwandigen Ausführung der Zylinderwand 8 ist der Mischinjektor mit einer Verteilerringrohrleitung 23 ausgerüstet, wobei Luft unter Druck mittels des Luftverdichters 5 dem Mischinjektor oder über die Rohrleitung 24 der Ringrohrleitung zugeführt wird.

Der Druckstutzen des Luftverdichters ist mit dem Zwischenraum 30 des Doppelwandzylinders 8 oder mit der Rohrleitung 24 verbunden.

Durch die Lufteinpressung über gesinterte Polyethylen-Kerzen 22 in die Injektionsmischkammer 20 wird mit Hilfe des Mischinjektors 10 eine hydraulische Kreisumwälzung des Substrates im Reaktorraum 2 hervorgerufen, wie dies durch die Linien 34 angedeutet ist.

Im Reaktorraum 1 ist oberhalb des Kegelbodens 19 zentral eine Strahlpumpe 7 mit seitlich offener Düsenmischkammer angeordnet, die das Substrat im Reaktorraum 1 von unten ansaugt und nach oben pumpt. Die Strahlpumpe 7 ist umgeben von der Wendel eines rohrförmigen Wärmetauschers 6, der damit als Leitrohr wirkt, wie auch die ringförmige Zwischenkammer 44, wodurch eine hydraulische Kreisumwälzung des Substrates im Reaktorraum 1 bewirkt wird, wie dies durch die Linien 32 angedeutet ist. Diese hydraulische Umwälzung wird überlagert von einer thermischen Zirkulation, die hervorgerufen wird durch den Wärmetauscher 6.

Die Vorlauf- und Rücklaufanschlüsse des Wärmetauschers 6 sind mit den Bezugszeichen 16 und 18 bezeichnet. Die gewendelten Wärmetauscherrohre bestehen vorzugsweise aus Kunststoff-Polypropylenrohren. Als Stützkonstruktion dienen jeweils zwei einzelne U-förmige Rohre, die gleichzeitig Verteilerrohre für den Vorlauf und den Rücklauf bilden. Für den Fall einer hohen Wärmeentwicklung im Reaktor bzw. bei Einspeisung von Wasser mit zu hoher Temperatur kann der Wärmetauscher 6 auch zur Substratkühlung genutzt werden.

Für die Rückführung eines weitgehend gasfreien Substrates vom Reaktorraum 2 in den Reaktorraum 1 ist der Gasabscheider 47 vorgesehen. Die Entgasungsleitung 37 ist mit dem Gasraum des Reaktorraumes 2 verbunden. Am Reaktorraum 2 sind noch zwei Austragstutzen 21 und 53 angeordnet, wobei Stutzen 53 für die Substratrückführung und Stutzen 21 über das Doppel-U-Rohr 52 zum Austragen biologisch gereinigten Wassers dient. Beide Austragstutzen befinden sich an der untersten Stelle der Trichterspitze 25 des Reaktorraumes 2. Der erste U-Rohr-Schenkel 51 ist über eine Leitung 36 mit dem Gasraum des zweiten Reaktorraumes verbunden.

Das im Reaktorraum 2 entstehende Biogas ($CO_2$) sowie die überschüssige Luft ist über das Regelventil 3 und das im Reaktorraum 1 sowie der integrierten Zone gebildete Biogas ($N_2 + CO_2 + H_2S$) ist über ein differenzdruckgeregeltes Überströmventil 4 ableitbar.

Das Regelventil 3 dient für die Regelung des Druckes im Gasraum des Reaktorraumes 2, wobei dieser Gasraum mit dem Sicherheitsventil 29 ausgerüstet ist.

Der in den Zeichnungen dargestellte Reaktor wird bei normalen Substraten mit einem Raumverhältnis des ersten Reaktorraumes 1 für die Denitrifikationsphase zum zweiten Reaktorraum 2 für die Nitrifikationsphase von etwa 1 : 3 gebaut.

Der in der Zeichnung dargestellte Reaktor arbeitet wie folgt:

Der erste Reaktorraum 1 wird mit dem zu behandelnden Wasser durch die Beschickungsleitung 14 über den geöffneten Absperrschieber 41 -der Absperrschieber 40 ist in diesem Fall geschlossen- beschickt, wobei die nachgeschaltete Strahlpumpe 7 das Substrat hydraulisch umgewälzt,und hierbei ein Verhältnis von Belebtsubstrat zum eingespeisten frischen Substrat von mindestens 3 : 1 eingestellt ist. Die Beschickung erfolgt dabei über die externe Pumpe 39, die das Wasser aus dem Behälter 35 entnimmt. Darüber hinaus wird durch die Substratrückführungspumpe 33 Substrat aus dem Reaktorraum 2 entnommen und über den Gasabscheider in den Reaktorraum 1 zurückgeführt. Während der kontinuierlichen Beschickung wird mittels der Strahlpumpe 7, die an der Düsenmischkammer mit seitlichen Schlitzen versehen ist, Belebtsubstrat angesaugt und mit dem eingespeisten, verschmutzten Wasser gemischt. Dabei strömt während des Beschickungsvorganges Belebtschlamm von unten in den Wärmetauscher ständig nach. Nach der Beschickung des Reaktorraumes 1 wird durch den eingetretenen Temperaturabfall der Wärmetauscher 6 in Betrieb genommen, um die vorgesehene optimale Temperatur von ca. 35°C einzustellen und konstant zu halten. Durch die Einschaltung des Wärmetauschers findet, wie bereits erwähnt, eine weitere Umwälzung inform einer thermischen Zirkulation des Substrates statt.

Zur Erzielung von günstigen Prozeßwirkungsgraden bei möglichst geringem Materialverbrauch wird ein Verhältnis zwischen Höhe und Durchmesser des Reaktors von etwa 2 : 1 gewählt.

Weiter kann der Ringspalt 11 mit Hilfe der Vorrichtung 27 nachträglich in der Höhe eingestellt werden.

Um bei verschiedenen Reaktorbelastungen -unter Berücksichtigung der in den Gasräumen des Reaktor-

EP 0 357 753 B1

raumes 1 und 2 vorhandenen Überdrücke- ein konstantes Substrat-Raumvolumen zu erzielen, wird durch eine Differenzdruckregelung, mittels des Überströmventiles 4, das im Reaktorraum 1 produzierte überschüssige Biogas ($N_2 + CO_2 + H_2S$) in die Atmosphäre abgelassen. Das im Reaktorraum 2 produzierte Biogas $CO_2$ sowie die eingeblasene, nicht verbrauchte überschüssige Luft wird über das Regelventil 3 abgelassen.

Das in der Anaerobzone 15 gebildete Biogas ($CH_4 + CO_2 + H_2S$) steigt zum anoxischen Raum auf, wobei das Methangas ($CH_4$) dort als Kohlenstoffquelle zur Denitrifikation von Nitrat-Stickstoff verbraucht bzw. umgewandelt wird.

Für Sonderfälle kann die Ablaßleitung des Überströmventiles 4 mit der Ablaßleitung des Regelventiles 3 zusammengeschaltet werden. Soweit ein hoher Anteil an Schwefelwasserstoff im abzuleitenden Biogas vorhanden ist, kann dieses auch über eine Gasreinigungsanlage gefahren werden.

Für die Phosphatrücklösung wird Schlamm durch die Schlammrückführpumpe 38 aus dem Nachklärbekken 55 entnommen und über die Einspeiserohrleitung 17 in die anaerobe Zone eingespeist. Der Absperrschieber 42 ist bei diesem Vorgang geöffnet und der Schieber 43 geschlossen.

Durch die Beschickung des Reaktorraumes 1 sowie durch die Substrat- und Schlammrückführung werden insbesondere über den Schlitz 54 der Sedimentationsvorrichtungen 12 und 13 die in der anaeroben Zone 15 gebildeten Stoffwechselprodukte verdrängt und über den Ringspalt 11 in die Injektionsmischkammer 20 gefördert sowie mit Belebtschlamm aus dem Reaktorraum 2 gemischt und mit Hilfe des Mischinjektors über die Zwischenringkammer 44 in den Reaktorraum 2 gefördert und durch gleichzeitige Kreisumwälzung entsprechend verteilt. Durch den kontinuierlichen Substratfluß über den Ringspalt 11 sowie durch die Substratrückführung mittels der Pumpe 33 werden die gegenläufigen ph-Wertänderungen in den Prozeßräumen kompensiert, d.h., daß sich im Reaktorraum 1 und 2 und in der anaeroben Zone 15 ein konstanter ph-Wert im Bereich von 7 einstellt.

Für die Kreisumwälzung nach dem Schlaufenprinzip im Reaktorraum 2 ist die Lufteinpressung über die Polyethylen-Kerzen in der Mischkammer 20 maßgebend.

Eine Anordnung aus Gasverdichter 5, ringförmigem Zwischenraum als Leitrohr, Mischinjektor 10 und ringförmiger Zwischenkammer 44 als weiteres Leitrohr wird auch als Mammutpumpe bezeichnet. Durch den hochgezogenen Kegelboden des ersten Reaktorraumes können sich im Bodenbereich keine Sedimentationsschichten bilden. Die in den ersten Reaktorraum geförderten und nicht abbaubaren Stoffe rutschen auf dem Kegel in den zweiten Reaktorraum und können von dort abgeschlammt bzw. ausgetragen werden.

Das biologisch gereinigte Wasser wird aus dem Reaktorraum 2 über den Austragstutzen 21 gemäß der in den Reaktorraum 1 sowie der Zone 15 eingespeisten Substratmengen abgelassen. Das abgelassene Wasser fließt durch das Doppel-U-Rohr 52 -das gleichzeitig als Siphon mit dem Schenkel 51 für einen größeren Gasdruck im Gasraum des zweiten Reaktorraumes zur erhöhten Sauerstoffaufnahme dient- in das Nachklärbekken 55 oder einen Absetzbehälter. Nach entsprechender Absetzzeit wird das gereinigte Wasser über die Rohrleitung 56 entnommen bzw. abgeleitet.

In dem Fall, daß das im Behälter 35 aufgenommene oder gespeicherte Wasser nicht über den erforderlichen Anteil an organischen Kohlenstoffverbindungen verfügt, wird ein organisches Substrat wie Ethanol oder Methanol durch die Pumpe 45 dem einzuspeisenden Wasser zudosiert. Das organische Substrat wird in dem Behälter 46 gespeichert. Darüber hinaus werden für die Immobilisierung von Mikroorganismen durch Adsorption offenporige, poröse Trägermaterialien aus gesintertem Glas oder Kunststoff als Substratleitflächen (59 u. 61) in den Reaktorräumen (1 u. 2) angebracht. Da die Leitflächen in den Halterungen (60 u. 62) sternförmig angeordnet sind und jeweils die gleiche Bauhöhe wie der Wärmetauscher (6) oder des Leitrohres (9) aufweisen, kann das Substrat ohne wesentliche Strömungsverluste an den Leitflächen vorbeigeführt bzw. umgelenkt werden.

Ebenso kann bei veränderten Wasserverhältnissen der Reaktor variabel durch Umschaltung betrieben werden.

Der bei dem Prozeßablauf anfallende Überschußschlamm wird über die Leitung (57) in einen Schlammcontainer (58) abgeschlammt

Für den Fall, daß das zu reinigende Wasser mit einem ph-Wert im alkalischen Bereich von über 8 zur Verfügung steht oder sich dieser Wert aufgrund der Zusammensetzung des Wassers während des Prozeßablaufes im Reaktor einstellt, kann durch Diffusion über eine Membranfläche der entsprechende Ammoniakanteil extrahiert werden. Die Extraktion erfolgt über hydrophobe, diffusionsfähige Kunststoffrohre des Prozeßwärmekreislaufes, der in den Zeichnungen nicht dargestellt ist. Das wärmeführende Medium in den Kunststoffrohren wird mit einem ph-Wert von mehr als 11 oder mit einem entsprechenden ph-Wert-Gradienten umgewälzt.

**Patentansprüche**

1. Verfahren zur anoxischen, anaeroben und aeroben Behandlung von Wasser mit entsprechenden konzentrationen an Stickstoff- und Phosphorverbindungen sowie organischer Substanzen, insbesondere an hochmolekularen organischen Stoffen, wie Proteinen, Kohlehydraten und Fetten, **dadurch gekennzeichnet,** daß zwei miteinander in Verbindung stehende Reaktorräume mit dem Substrat gleichzeitig gefüllt werden, durch den in dem ersten Reaktorraum stattfindenden Denitrifikationsprozeß Nitrate in molekularen Stickstoff umgewandelt werden, in einer integrierten Anaerobzone Phosphatverbindungen rückgelöst werden, im zweiten Reaktorraum eine Nitrifikation von Stickstoffverbindungen erfolgt und gleichzeitig organischer Kohlenstoff abgebaut und in Kohlendioxid umgewandelt wird sowie eine erhöhte Phosphataufnahme erfolgt, das zu behandelnde Wasser in den anoxischen Raum des ersten Reaktorraumes und Rücklaufschlamm in die anaerobe Zone des gleichen Reaktorraumes eingespeist werden, die im ersten Reaktorraum und der integrierten Anaerobzone des ersten Reaktorraumes biologisch behandelten Substrate sowie die gebildeten Produkte quasi kontinuierlich über einen einstellbaren Ringspalt in den zweiten Reaktorraum eingeleitet werden, wobei im ersten und zweiten Reaktorraum das Substrat jeweils nach dem Kreisprinzip umgewälzt wird und die im ersten und zweiten Reaktorraum gebildeten Stoffwechselprodukte kohlendioxid und Stickstoff in die Atmosphäre abgeleitet werden.

2. Verfahren nach Anspruch 1 **dadurch gekennzeichnet,** daß die anaerobe Zone dem anoxischen Raum nachgeschaltet und dem aeroben Raum vorgeschaltet ist.

3. Verfahren nach Anspruch 1 **dadurch gekennzeichnet,** daß das in der anaeroben Zone gebildete Methangas in den anoxischen Raum aufsteigt und dort als Kohle stoffquelle bzw. Wasserstofflieferant für die Umwandlung von Nitrat-Stickstoff in molekularen Stickstoff dient.

4. Verfahren nach Anspruch 1 **dadurch gekennzeichnet,** daß der Rückführschlamm aus dem Absetzbekken und/oder das zu behandelnde Substrat in die anaerobe Zone oder in den anoxischen Raum eingespeist werden bzw. wird.

5. Verfahren nach Anspruch 1 **dadurch gekennzeichnet,** daß bei einem zu behandelnden Wasser mit entsprechenden konzentrationen an Stickstoff- und Phosphorverbindungen, jedoch ohne organische Substanzen, ein organisches Substrat in den anoxischen Raum eingespeist wird.

6. Verfahren nach Anspruch 1 **dadurch gekennzeichnet,** daß die Temperatur im ersten und zweiten Reaktorraum auf etwa 35°C eingestellt wird.

7. Verfahren nach Anspruch 1 **dadurch gekennzeichnet,** daß die Gasdrücke der in den Gasräumen der beiden getrennten Reaktorräume vorhandenen Gase mit gleicher oder unterschiedlicher Größe eingeregelt werden.

8. Vorrichtung zur Durchführung des Verfahrens nach Anspruch 1, **gekennzeichnet durch** einen Doppelschlaufenreaktor mit einem ersten Reaktorraum (1) für die Umwandlung des aus dem zweiten Reaktorraum zurückgeführten Nitratstickstoffes in molekularen Stickstoff, der eine integrierte Anaerobzone (15) und Schlammabsetzvorrichtungen (12 u. 13) zur Rücklösung von Phosphaten aufweist, und mit einem zweiten, den ersten Reaktorraum (1) umschließenden Reaktorraum (2) zur Umwandlung der in den ersten Reaktorraum (1) eingespeisten Stickstoff-und organischen Kohlenstoffverbindungen, und zwar in Nitratstickstoff und Kohlendioxid, wobei im ersten und/oder zweiten Reaktorraum Einrichtungen zur Umwälzung der in den Reaktorräumen befindlichen Substrate angeordnet sind, der erste Reaktorraum (1) und der zweite Reaktorraum (2) über einen Ringspalt (11) im Bodenbereich miteinander in Verbindung stehen und die oberen, die Gasräume bildenden Teile der beiden Reaktorräume voneinander getrennt und geschlossen sind.

9. Vorrichtung nach Anspruch 8 **dadurch gekennzeichnet,** daß der erste Reaktorraum (1) mit einer doppelwandigen Zylinderwand (8) ausgebildet ist, deren unteres Ende als Mischinjektor (10) ausgebildet ist und über deren Zwischenraum (30) oder über die Rohrleitung (24) mit Verteilerringrohr (23) Luft unter Druck von oben dem Mischinjektor (10) zuführbar ist, und die verdichtete Lu durch porös ausgebildete Kerzen (22) in die Injektionsmichkammer (20) eingeblasen wird, und das Substrat über die Ringkammer (44) in den zweiten Reaktorraum (2) zur Förderung der Mischung gelangt.

10. Vorrichtung nach Anspruch 8 oder 9 **dadurch gekennzeichnet,** daß die schlaufen- bzw. kreisförmige Substratumwälzung (34) durch die Lufteinpressung in der Injektionskammer (20) über eine als Überlaufkammer ausgebildete ringförmige zylindrische Kammer (44) im zweiten Reaktorraum erfolgt, die von der Zylinderwand (8) und einer diese beabstandet umgebenden zylindrischen Wand (9) gebildet wird, die mit Abstand oberhalb des Bodens des Reaktorraumes (2) endet.

11. Vorrichtung nach Anspruch 8 bis 10 **dadurch gekennzeichnet,** daß die schlaufen- bzw. kreisförmige Substratumwälzung (32) im ersten Reaktorraum (1) durch die innerhalb des Wärmetauschers (6) angeordnete Wasserstrahlpumpe (7) in Zusammenarbeit mit der Substratrückführpumpe (33) erfolgt.

12. Vorrichtung nach einem der Ansprüche 8 bis 11 **dadurch gekennzeichnet,** daß der erste Reaktorraum

EP 0 357 753 B1

(1) einen hochgezogenen Boden mit kegelförmiger Bodenfläche (19) aufweist, daß der Ringspalt (11) zwischen dem unteren Ende der Zylinderwand (8) und dem kegelförmigen Boden (19) gebildet ist, wobei die in den ersten Reaktorraum (1) eingespeisten Substrate sowie die gebildeten Produkte durch den Ringspalt (11) in die Injektionsmischkammer (20) strömen, die begrenzt wird vom kegelförmigen Boden (19), dem unteren Teil der zylindrischen Wand (9) und dem Mischinjektor (10).

13. Vorrichtung nach einem der Ansprüche 8 bis 12 **dadurch gekennzeichnet**, daß im ersten Reaktorraum (1) innerhalb der Mitte eines senkrechten Wärmetauschers (6) eine Wasserstrahlpumpe (7) angeordnet ist, die durch eine seitlich offene Düsenmischkammer Belebtschlamm zum eingespeisten Substrat in einem Verhältnis von etwa 3 : 1 ansaugt und mischt.

14. Vorrichtung nach einem der Ansprüche 8 bis 13 **dadurch gekennzeichnet**, daß im ersten Reaktorraum (1) im unteren Bereich durch die Anordnung der Sedimentationsvorrichtungen (12 u. 13) eine Anaerobzone (15) gebildet wird.

15. Vorrichtung nach einem der Ansprüche 8 bis 14 **dadurch gekennzeichnet**, daß durch die Schlitze (28 u. 31) oberhalb der Sedimentationseinrichtungen (12 u. 13) das in der Anaerobzone (15) gebildete Biogas in den Gasraum des ersten Reaktorraumes (1) abgeleitet wird.

16. Vorrichtung nach einem der Ansprüche 8 bis 15 **dadurch gekennzeichnet**, daß der Wärmetauscher (6) durch seine Rohrkonstruktion bei gedrosselter Substratrückführpumpe (33) die kreisförmige Substratumwälzung (32) im Reaktorraum (1) durch thermische Zirkulation, die der mechanischen Umwälzung überlagert ist, weitgehend übernimmt.

17. Vorrichtung nach einem der Ansprüche 8 bis 16 **dadurch gekennzeichnet**, daß der zweite Reaktorraum (2) den ersten Reaktorraum (1) ringförmig umgibt.

18. Vorrichtung nach einem der Ansprüche 8 bis 17 **dadurch gekennzeichnet**, daß die Beschickung des Reaktors durch eine Doppelrohrleitung (14 u. 17) erfolgt, wobei die Rohrleitung (14) innerhalb der Rohrleitung (17) angeordnet ist, einen Außendurchmesser aufweist, der kleiner ist als der Innendurchmesser der Rohrleitung (17) und im Bereich der Sedimentvorrichtung (13) mit einer Substratumlenkvorrichtung (26) ausgerüstet ist.

19. Vorrichtung nach einem der Ansprüche 8 bis 18 **dadurch gekennzeichnet**, daß das Substrat aus dem zweiten Reaktorraum (2) vor der Einspeisung in den ersten Reaktorraum (1) durch einen Gasabscheider (47) von freien Gasen befreit wird, der mit einer Umlenkvorrichtung (48) sowie entsprechenden Prallblechen (49) ausgerüstet ist.

20. Vorrichtung nach einem der Ansprüche 8 bis 19 **dadurch gekennzeichnet**, daß der Gasabscheider (47) etwa in der Höhe des Flüssigkeitsspiegels außen am Reaktor angebracht und die Gasabführleitung (37) mit dem Gasraum des zweiten Reaktorraumes verbunden ist.

21. Vorrichtung nach einem der vorhergehenden Ansprüche 8 bis 20 **dadurch gekennzeichnet**, daß der Reaktorraum (1) mit seiner Zylinderwand (8) und der zylindrischen Wand (9) als Einsatz ausgebildet und zusammen mit dem Wärmeaustauscher (6) nach oben herausziehbar ist.

22. Vorrichtung nach einem der Ansprüche 8 bis 21 **dadurch gekennzeichnet**, daß das biologisch behandelte Substrat durch einen Austragstutzen (21) in Bodennähe über ein Doppel-U-Rohr (52) ausgetragen wird.

23. Vorrichtung nach einem der Ansprüche 8 bis 22 **dadurch gekennzeichnet**, daß das biologisch behandelte Substrat über ein Doppel-U-Rohr (52) ausgetragen wird, dessen erster Schenkel (51) zur Erzielung eines höheren Gasdruckes im Gasraum des zweiten Reaktorraumes (2) dient, und zwar in Abhängigkeit von der Höhe des Schenkels, der über die Leitung (36) mit dem Gasraum des zweiten Reaktorraumes (2) verbunden ist.

24. Vorrichtung nach einem der Ansprüche 8 bis 23 da**durch gekennzeichnet**, daß die Luft mit Hilfe eines Gasverdichters (5) dem zweiten Reaktorraum (2) zugefürt wird, dessen Druckstutzen sich an dem Zwischenraum (30) oder an der Rohrleitung (24) befindet.

25. Vorrichtung nach einem der Ansprüche 8 bis 24 **dadurch gekennzeichnet**, daß der Gasdruck im Gasraum des Reaktorraumes (2) mit Hilfe des Regelventils (3) eingestellt wird.

26. Vorrichtung nach einem der Ansprüche 8 bis 25 **dadurch gekennzeichnet**, daß die Temperatur im Reaktorraum (1 u. 2) durch den Wärmetauscher (6) eingestellt wird, wobei dieser über einen Wärmevorlauf (16) und einen Wärmerücklauf ( 18) an eine Wärmequelle anschließbar ist.

27. Vorrichtung nach einem der Ansprüche 8 bis 26 **dadurch gekennzeichnet**, daß das Verhältnis Höhe : Durchmesser des Biogasreaktors etwa 2 : 1 beträgt.

28. Vorrichtung nach einem der Ansprüche 8 bis 27 **dadurch gekennzeichnet**, daß der Ringspalt (11) durch eine Vorrichtung (27), die mit dem Reaktorraum (1 u. 2) verbunden ist, in der Höhe eingestellt werden kann.

29. Vorrichtung nach einem der Ansprüche 8 bis 28 **dadurch gekennzeichnet**, daß der Boden im Reaktorraum (2) inform einer umlaufenden Trichterspitze (25) ausgebildet ist.

30. Vorrichtung nach einem der Ansprüche 8 bis 29 **dadurch gekennzeichnet**, daß durch das Überström-

7

EP 0 357 753 B1

regelventil (4) ein entsprechender Gasdifferenzdruck zwischen den Gasräumen des Reaktorraumes (1 u. 2) eingestellt wird.

31. Vorrichtung nach einem der Ansprüche 8 bis 30 **dadurch gekennzeichnet**, daß am äußeren Randbereich des Mischinjektors (10) innerhalb der Mischkammer (20) oder auf der Verteilerringrohrleitung (23), die den Randbereich des Mischinjektors abschließt, Polyethylenkerzen aus einem gesintertem Material mit einer Porengröße von 100 μm umlaufend angebracht sind.

32. Vorrichtung nach einem der Ansprüche 8 bis 31 **dadurch gekennzeichnet**, daß ein organisches Substrat aus dem Speicherbehälter (46) durch die Pumpe (45) in den anoxischen Raum des Reaktorraumes (1) eingespeist wird.

33. Vorrichtung nach einem der Ansprüche 8 bis 32 **dadurch gekennzeichnet**, daß der Wärmetauscher (6) aus hydrophoben, diffusionsfähigen Kunststoffrohren für die Extraktion von Ammoniak angeordnet ist.

34. Vorrichtung nach einem der Ansprüche 8 bis 33 **dadurch gekennzeichnet**, daß an der inneren Rohrwand (8) des Reaktorraumes (1) und an der Innenwand des Leitrohres (9) des Reaktorraumes (2) offenporige, poröse Trägermaterialien (59 u. 61) aus gesintertem, keramischen Material oder gesintertem Kunststoff mit einer mittleren Porengröße von 80 μm angeordnet sind.

35. Vorrichtung nach einem der Ansprüche 8 bis 34 **dadurch gekennzeichnet**, daß die Trägermaterialien sternförmig als Substratleitflächen angeordnet sind.

## Claims

1. A process for the anoxic, anaerobic and aerobic treatment of water with the corresponding concentrations of nitrogen and phosphore compounds as well as with organic substances, especially of organic substances of high molecular weight, as proteins, carbohydrates and fats. Two reactor chambers being connected together will be fed simultaneously with the substrate; the nitrates will be transformed into molecular nitrogen by the denitrification process taking place in the first reactor chamber; in an integrated anaerobic zone phosphate compounds will be resolved back; in the second reactor chamber is made a nitrification of nitrogen compounds and simultaneously organic carbon is decomposed and transformed into carbon dioxide, an increased phosphate absorption follows; the water to be treated is fed into the anoxic chamber of the first reactor chamber and return sludge is fed into the anaerobic zone of the same reactor chamber; the substrates biologically treated in the first reactor chamber and in the anoxic chamber of the first reactor chamber as well as the developed products will be fed through an adjustable annular gap into the second reactor chamber, whereby in the first and second reactor chamber the substrate will be circulated; the metabolic products carbon dioxide and nitrogen developped in the second reactor chamber will be discharged into the atmosphere.

2. A method according to claim 1. The anaerobic zone is topped to the anoxic chamber and superposed to the aerobic chamber.

3. A method according to claim 1. The methane built in the anaerobic zone bubbles up into the anoxic chamber and serves there as carbon source resp. hydrogen formulator for the transformation of nitric nitrogen into molecular nitrogen.

4. A method according to claim 1. The return sludge out of the sedimentation tank and/or the substrate to be treated are fed into the anoxic chamber.

5. A method according to claim 1. An organic substrate is fed into the anoxic chamber in case the water to be treated contains the corresponding concentration of nitrogen and phosphate compounds, however no organic substances.

6. A method according to claim 1. The temperature is adjusted to approx. 35 C in the first and second reactor chamber.

7. A method according to claim 1. The pressures of the gases existing in the gas chambers of both separate reactor chambers can be adjusted with the same or different size.

8. A device for the execution of a process according to claim 1. A double loop-type bubble column with a first reactor chamber (1) for the transformation into molecular nitrogen of the nitrique nitrogen led back from the second reactor chamber, which has an integrated anaerobic zone (15) and sludge sedimentation devices (12 and 13) for the return solution of phosphates; and with a second reactor chamber (2) surrounding the first reactor chamber (1) for the transformation of the nitrogen and organic carbon compounds fed into the first reactor chamber, namely into nitric nitrogen and carbon dioxide; in the first and/or second reactor chamber are placed devices for the circulation of the substrates existing in the reactor chambers. The first reactor chamber (1) and the second reactor chamber (2) are connect by an annular gap (11) in the bottom area and the upper parts of the two reactor chambers, which are forming the gas chambers, are separated and closed.

9. A device according to claim 8. The first reactor chamber (1) is constructed with a double cylinder wall

8

(8), the lower part of which is constructed as mixing injector (10) and through the space (30) of which or through the duct (24) with distributing ring pipe (23) the air is feedable under pressure from the top into the mixing injector, the compressed air is injected into the injection mixing chamber (20) through porous plugs (22); the substrate is led through the toroidal chamber (44) into the second reactor chamber (2) for supporting the mixing process.

10. A device according to claim 8 or 9. The loop-type or annular substrate circulation (34) is made by air injection into the injection chamber (20) through an annular cylindric chamber (44) being built as overflow chamber in the second reactor chamber and being built by the cylinder wall (8) and a cylindric wall (9) surrounding the cylinder wall and ending above the bottom of the reactor chamber (2).

11. A device according to claim 8 to 10. The loop-type or annular substrate circulation (32) in the first reactor chamber (1) is made through the water jet pump (7) placed in the heat exchanger (6) together with the substrate return pump (3).

12. A device according to claim 8 to 11. The first reactor chamber (1) has a pulled up bottom with conical bottom area (19); the annular gap (11) is built between the lower end of the cylinder wall (8) and the conical bottom (19), whereby the substrates fed into the first reactor chamber (1) as well as the developed products are flowing through the annular gap (11) into the injection mixing chamber (20) which is limited by the conical bottom (19), the lower part of the cylindric wall and the mixing injector (10).

13. A device according to claim 8 to 12. A water jet pump (7) is placed in the first reactor chamber (1) in the middle of a vertical heat exchanger (6); the pump is sucking in activated sludge to the fed substrate through a mixing jet chamber being open at the sides, in a proportion of 3 : 1 and is mixing the mass.

14. A device according to claim 8 to 13. In the first reactor chamber (1) an anaerobic zone is built in the lower part by the placement of the sedimentation devices (12 and 13).

15. A device according to claim 8 to 14. Le biogas built in the anaerobic zone (15) is discharged through the slots (28 and 31) above the sedimentation devices (12 and 13) into the gas chamber of the first reactor chamber (1).

16. A device according to claim 8 to 15. The heat exchanger (6) carries out the substrate circulation (32) in the reactor chamber (1) through its tube construction with throttled substrate return pump (33) by thermic circulation which superimposes the mechanical circulation.

17. A device according to claim 8 to 16. The second reactor chamber (2) is sourrounding the first reactor chamber (1) annularly.

18. A device according to claim 8 to 18. The feeding of the reactor is made through a double duct (14 and 17), whereby the duct (14) is placed within the duct (17), has a external diameter being smaller than the internal diameter of the duct (17) and is equipped with a substrate reversing device (26) in the area of the sedimentation device.

19. A device according to claim 8 to 18. Before feeding to the first reactor chamber (1) the substrate out of the second reactor chamber (2) is made free of gas by a gas separator equipped with a reversing device (48) as well as with corresponding impact plates (49).

20. A device according to claim 8 to 19. The gas separator (47) is mounted approx. at the height of the liquid level at the outside of the reactor and the gas discharging duct (37) ist connected with the gas chamber of the second reactor chamber.

21. A device according to claim 8 to 20. The reactor chamber (1) with its cylinder wall (8) and the cylindric wall (9) is constructed as inset and can be pulled out to the top.

22. A device according to claim 8 to 21. The biologically treated substrate is discharged by a discharge nozzle (21) near the bottom through a double-U-tube (52).

23. A device according to claim 8 to 22. The biologically treated substrate is discharged through a double-U-tube (52), the first leg of which (51) serves for achieving a higher gas pressure in the gas chamber of the second reactor chamber (2), namely in dependence of the height of the leg, which is connected by the duct (36) with the gas chamber of the second reactor chamber (2).

24. A device according to claim 8 to 23. The air is fed with the help of a gas compressor (5) into the second reactor chamber (2), the pressure nozzle of which is installed at the space (30) or at the duct (24).

25. A device according to claim 8 to 24. The gas pressure of the gas chamber of the reactor chamber (2) is adjusted by means of a control valve (3).

26. A device according to claim 8 to 25. The temperature in the reactor chambers (1 and 2) is adjusted by the heat exchanger (6), whereby this heat exchanger can be installed to a source of heat through a preflow (16) or a flowback (18) of heat.

27. A device according to claim 8 to 26. The proportion height to diameter of the biogas reactor is approx. 2 : 1.

28. A device according to claim 8 to 27. The annular gap (11) can be adjusted in height by a device (27) being connected with the reactor chambers (1 and 2).

29. A device according to claim 8 to 28. The bottom in the reactor chamber (2) is built in form of a rotating funnel top (25).

30. A device according to claim 8 to 29. A corresponding differential gas pressure between the gas chambers of the reactor chambers (1 and 2) can be adjusted by a overflow control valve (4).

31. A device according to claim 8 to 31. At the external edge of the mixing injector (10) within the mixing chamber (20) or on the distributing annular duct (23), closing the edge area of the mixing injector, polyethylene plugs out of sintered material are installed with a pores' size of 100.

32. A device according to claim 8 to 31. An organic substrate will be fed from the storage tank (46) through the pump (45) into the anoxic chamber of the reactor chamber (1).

33. A device according to claim 8 to 32. The heat exchanger (6) out of hydrophobic, diffusible plastic tubes is installed for the extraction of ammonia.

34. A device according to claim 8 to 34. At the inner tube wall (8) of the reactor chamber (1) and at the inner wall of the duct (9) of the reactor chamber (2) porous carrier materials (59 and 61) out of sintered, ceramic material or sintered plastic is placed with a medium pores' size of 80.

35. A device according to claim 8 to 34. The carrier materials are place star-shapedly as substrate conducting surfaces.


## Revendications

1. Une méthode pour le traitement anoxie, anaérobie et aérobie des eaux avec des concentrations correspondantes des combinaisons d'azote et de phosphore ainsi que des éléments organiques, specialement des matières à haute densité moléculaire, comme des protéines, des hydrates de carbone et des matières grasses, caractérisée par les faits, que les deux chambres des réacteurs connectées sont alimentées en même temps avec le substrat; que par le procédé de dénitrification executé dans la première chambre du réacteur, des nitrates sont transformés en azote moléculaire; que dans une zone anaérobie intégrée des combinaisons de phosphate sont recyclées; que dans la deuxième chambre du réacteur se passe une nitrification des combinaisons d'azote et en même temps le carbone organique est décomposé et transformé en dioxyde de carbone ainsi qu'il est réalisé un captage de phosphate élevé; que l'eau à traiter est alimentée à la chambre anoxie de la première chambre du réacteur et que la boue de recyclage est alimentée à la zone anaérobie de la même chambre du réacteur; que les substrats biotraités dans la première chambre du réacteur et dans la zone anaérobie intégrée de la première chambre du réacteur ainsi que les produits formés sont alimentés à la deuxième chambre du réacteur quasi en continu sur un passage annulaire et ajustable, à l'occasion duquel le substrat est circulé selon le principe circulaire; et que les produits du métabolisme formés dans la première et la deuxième chambre du réacteur, le dioxyde de carbone et d'azote, sont déchargés dans l'atmosphère.

2. Une méthode selon titre 1. La zone anaérobie est intercalée en arrière de la chambre anoxie et en amont de la chambre aérobie.

3. Une méthode selon titre 1. Le méthane formé dans la zone anaérobie monte à la chambre anoxie et là il sert pour source de carbone resp. fournisseur d'hydrogène pour la transformation de l'azote nitrique à l'azote moléculaire.

4. Une méthode selon titre 1. La boue de recyclage du bassin sédimentaire etou le substrat à traiter sont alimentés à la zone anaérobie ou à la chambre anoxie.

5. Une méthode selon titre 1. Un substrat organique est alimenté à la chambre anoxie en cas des eaux à traiter avec des concentrations correspondantes des combinaisons de l'azote et du phosphore.

6. Une méthode selon titre 1. La température dans la première et la deuxième chambre du réacteur est ajustée à 35 °C.

7. Une méthode selon titre 1. Les pressions de gaz pour les gaz existants dans les chambres du gaz des deux chambres des réacteurs séparées peuvent être réglés àune gammi identique ou différent.

8. Un dispositif pour l'exécution du procédé selon titre 1. Une colonne double à bulles à écoulement en boucles avec une première chambre du réacteur (1) pour la transformation de l'azote nitrique recyclé de la deuxième chambre du réacteur à l'azote moléculaire, laquelle présente une zone anaérobie intégrée (15) et des dispositifs de décantation des boues (12 et 13) pour le recyclage des phosphates, et avec une deuxième chambre du réacteur (2) entourant la première chambre du réacteur (2) pour la transformation des combinaisons de l'azote et du carbone organique alimentés à la première chambre du réacteur, et cela à l'azote nitrique et au dioxyde de carbone, et pour cela des dispositifs pour la circulation des substrats se trouvant dans les chambres des réacteurs sont placés dans la première et/ou la deuxième chambre des réacteurs; la première chambre du réacteur (1) et connectée avec la deuxième chambre du réacteur (2) par un passage annulaire (11) au fond; les parts hautes des deux chambres des réacteurs formant les chambres de gaz sont séparées et fermées.

9. Un dispositif selon titre 8. La première chambre du réacteur (1) est formée avec une paroi double de cylindre (8), le pied duquel est formé comme injecteur mélangeur (10) et au-dessus de l'espacement entre les parois (30) ou par la tuyauterie (24) avec tuyau distributeur annulaire (23) l'air est capable pour l'alimentation sous pression par le haut à l'injecteur mélangeur (10); l'air comprimé est insufflé par des bougies poreuses (22) à la chambre à malaxage à jet; le substrat parvient à la deuxième chambre du réacteur (2) par la chambre toroidale (44) pour la transportation du mélange.

10. Un dispositif selon titre 8 ou 9. Le mélange bouclé resp. circulaire du substrat (34) est réalisé par l'extraction au moyen de l'air comprimé dans la chambre à jet (20) par une chambre toroidale cylindrique (44) dans la deuxième chambre du réacteur, laquelle est construite comme chambre de trop-plein et laquelle est formée par la paroi du cylindre (8) et par une autre paroi cylindrique (9) entourant la paroi du cylindre, elle finit au-dessus du fond de la chambre du réacteur.

11. Un dispositif selon titre 8 à 10. Le mélange bouclé resp. circulaire du substrat (32) dans la première chambre du réacteur (1) est réalisé par l'éjecteur à eau (7) placé dans l'échangeur thermique (6) en cooperation avec la pompe de recyclage du substrat (33).

12. Un dispositif selon titre 8 à 11. La première chambre du réacteur (1) présente un fond dressé vers le haut avec une surface conique de fond (19); le passage annulaire (11) est construit entre le pied de la paroi du cylindre (8) et le fond conique (19), les substrats alimentés à la première chambre du réacteur (1) ainsi que les produits formés coulent par le passage annulaire (11) de la chambre à malaxage à jet (20), laquelle est limitée par fond conique (19), le pied de la paroi cylindrique (9) et de l'injecteur mélangeur (10).

13. Un dispositif selon titre 8 à 12. Dans la première chambre du réacteur (1) au milieu de l'échangeur thermique vertical (6) est placée un éjecteur à eau (7), lequel aspire une boue activée par une chambre à malaxage à jet ouvert sur le côté et lequel mélange la boue avec le substrat alimenté en proportion de env. 3 : 1.

14. Un dispositif selon titre 8 à 13. Dans la première chambre du réacteur (1) est formée une zone anaérobie (15) dans la part inférieure par le placement des dispositifs de sédimentation (12 et 13).

15. Un dispositif selon titre 8 à 14. Par les fentes (28 et 31) au-dessus des dispositifs de sédimentation (12 et 13) le biogaz formé dans la zone anaérobie (15) est déchargé à chambre du gaz de la première chambre du réacteur (1).

16. Un dispositif selon titre 8 à 15. L'échangeur thermique (6) par sa construction tubulaire entreprend largement la circulation du substrat (32) dans la première chambre du réacteur (1) par circulation thermique avec la pompe de recyclage du substrat étranglée (33).

17. Un dispositif selon titre 8 à 16. La deuxième chambre du réacteur (2) entoure annulairement la première chambre du réacteur.

18. Un dispositif selon titre 8 à 17. L'alimentation du réacteur est réalisée par un conduit à tube double (14 et 17); la tuyauterie (14) est placée dans la tuyauterie (17), le diamètre extérieur est plus petrit que le diamètre intérieur de la tuyauterie (17) et elle est muni d'un dispositif déflecteur du substrat (26).

19. Un dispositif selon titre 8 à 18. Avant l'alimentation à la première chambre du réacteur (1) le substrat de la deuxième chambre du réacteur (2) est déblayé des gaz libres par un séparateur de gaz, gui est muni d'un dispositif déflecteur (48) ainsi que des tôles de chicane (49).

20. Un dispositif selon titre 8 à 19. Le séparateur de gaz (42) est placé à la hauteur du niveau du liquide à l'extérieur du réacteur et le conduit de sortie du gaz (37) est connecté avec la chambre du gaz de la deuxième chambre du réacteur.

21. Un dispositif selon titre 8 à 20. La première chambre du réacteur (1) avec sa paroi de cylindre (8) et la paroi cylindrique (9) est construite comme un insert et enlevable vers le haut avec l'échangeur thermique (6).

22. Un dispositif selon titre 8 à 21. Le substrat biotraité est déchargé par une buse de rejet (21) à proximité de fond dans un tube en double U (52).

23. Un dispositif selon titre 8 à 22.. Le substrat biotraité est déchargé par un tube en double U (52), la première branche (51) sert pour l'obtention d'une pression de gaz élevée dans la chambre du gaz de la deuxième chambre du réacteur, et cela en fonction de la hauteur de la branche, qui est connectée par le conduit (36) avec la chambre du gaz de la deuxième chambre du réacteur (2).

24. Un dispositif selon titre 8 à 23. L'air est alimenté à l'aide d'un compresseur à gaz (5) à la deuxième chambre du réacteur (2), la culotte de laquelle se trouve à l'espacement (30) ou à la tuyauterie (24).

25. Un dispositif selon titre 8 à 24. La pression de gaz dans la chambre du gaz de la deuxième chambre du réacteur (2) est réglée à l'aide de la soupape de réglage (3).

26. Un dispositif selon titre 8 à 25. La température dans les chambres des réacteurs (1 et 2) est réglée par l'échangeur thermique (6), lequel est connectable à une source de chaleur par un aller de chaleur (16) et un retour de chaleur 18).

27. Un dispositif selon titre 8 à 26. La proportion de la hauteur diamètre du réacteur à biogaz est de env. 2 : 1.

28. Un dispositif selon titre 8 à 27. Le passage annulaire (11) peut être ajusté en hauteur par un dispositif (27) connecté avec les chambres des réacteurs (1 et 2).

29. Un dispositif selon titre 8 à 28. Le fond de la chambre du réacteur (2) est formé en forme d'un bout de l'entonnoir tournant.

30. Un dispositif selon titre 8 à 29. Par la soupape de décharge (4) une pression différentielle de gaz correspondante est réglée entre les chambres de gaz des chambres des réacteurs (1 et 2).

31. Un dispositif selon titre 8 à 30. Au bord de l'injecteur mélangeur (10) dans la chambre de malaxage (20) ou à la tuyauterie de distribution en forme de canalisation circulaire (23) fermant le bord de l'injecteur mélangeur, des bougies en polyethylène d'un matérial fritté avec une grosseur de pore de 100 sont installées.

32. Un dispositif selon titre 8 à 31. Un substrat organique du réservoir (46) est alimenté par la pompe (45) à la chambre anoxie de la première chambre du réacteur (1).

33. Un dispositif selon titre 8 à 32. L'échangeur thermique (6) forme par des tubes en plastique hydorphobes et capable de diffusion pour l'extraction d'ammoniac.

34. Un dispositif selon titre 8 à 33. A la paroi interne du tube (8) de la chambre du réacteur (1) et à la paroi interne du tube conducteur (9) de la chambre du réacteur (2) des matières support poreuse (59 et 61) en céramique frittée ou en plastique fritté sont placées avec une grosseur de pore de 80.

35. Un dispositif selon titre 8 à 34. Les matières support sont placées en étoiles comme des surfaces conductrices du substrat.

# Figur 1

EP 0 357 753 B1

## Figur 2

54  26  31 13 12

44
28
9
30
8
10
22
11
20

44
28
9
24
15
23
22
11
20

14  17

## Figur 3

37

49

50

47

48

14

Figur 4

9   59   60   8   1   6   62   61   2